# EUROPEAN PATENT SPECIFICATION

(11) **EP 3 418 585 B1**
(45) Date of publication and mention of the grant of the patent: **04.08.2021**
(21) Application number: 17461549.2
(22) Date of filing: 19.06.2017
(51) Int. Cl.: F15B 13/043, F16K 31/06

(54) **SERVO VALVE COMPRISING A NOZZLE ASSEMBLY**
SERVOVENTIL MIT EINER DÜSENANORDNUNG
SERVOVANNE COMPRENANT UN ENSEMBLE BUSE

(43) Date of publication of application: 26.12.2018
(73) Proprietor: Hamilton Sundstrand Corporation, Charlotte, NC 28217 (US)
(72) Inventor: Kozlowski, Piotr, 39-300 Mielec (PL); Sawicki, Piotr, 66-450 Bogdaniec (PL)
(74) Representative: Dehns

(56) References cited:
- DE-A1- 1 954 798
- DE-A1-102005 022 535
- US-B1- 6 755 205

## Description

### TECHNICAL FIELD

This disclosure relates to a servo valve having a flapper and a nozzle assembly.

This disclosure also relates to a method of assembling the servo valve and a method of calibrating the servo valve.

### BACKGROUND

Servo valves are well-known in the art and can be used to control how much fluid is ported to an actuator. Typically, a flapper is deflected by an armature connected to an electric motor away or towards nozzles, which inject the fluid. Deflection of the flapper can control the amount of fluid injected from the nozzles, and thus the amount of fluid communicated to the actuator. In this way, servo valves can allow precise control of actuator movement. Calibration of the servo valve is often required to ensure the correct control of actuator movement is realised, and is achieved by adjusting the axial distance from the nozzle outlet to the flapper.

Typically, the nozzles are interference fitted into a nozzle housing. The interference fit of the nozzle into the housing has to be very tight to ensure that it remains in the correct position within the housing at all operating temperatures. This tight fit can make it difficult to calibrate the servo valve, as it may make it difficult to move the nozzle axially within the nozzle housing.

A prior art servo valve having the features of the preamble to claim 1 is disclosed in US 6,755,205. A prior art fuel injection valve having a needle disposed in a nozzle body is disclosed in DE 10 2005 022535.

### SUMMARY

From one aspect, the present disclosure relates to a servo valve in accordance with claim 1.

In one embodiment of the above servo valve, the nozzle is received with an interference fit within the nozzle receiving bore.

In a further embodiment of any of the above servo valves, the locking pin is received with a close or loose fit in the locking pin receiving bore.

In a further embodiment of any of the above servo valves, the nozzle receiving bore is cylindrical.

In a further embodiment of any of the above servo valves, the locking pin receiving bore is cylindrical.

In a further embodiment of any of the above servo valves, the locking pin receiving bore is a through bore.

In a further embodiment of any of the above servo valves, the nozzle receiving bore is circular in cross section. In addition or alternatively, the locking pin receiving bore is circular in cross section.

In a further embodiment of any of the above servo valves, the nozzle is circular in cross section. In addition or alternatively, the locking pin is circular in cross section.

In a further embodiment of any of the above servo valves, the nozzle is provided with a threaded connection at one end for connection to a calibration tool.

In a further embodiment of any of the above servo valves, the nozzle receiving bore receives a pair of opposed nozzles.

From yet another aspect, the present disclosure relates to a method of assembling a servo valve in accordance with claim 11.

From yet another aspect, the present disclosure relates to a method of calibrating a servo valve in accordance with claim 12.

In one embodiment of the above method, the nozzle is received in the nozzle receiving bore with an interference fit.

In a further embodiment of any of the above methods, the nozzle is inserted or moved in the nozzle receiving bore by a tool engaging an end of the nozzle.

### BRIEF DESCRIPTION OF DRAWINGS

Some exemplary embodiments of the present disclosure will now be described by way of example only, and with reference to the following drawings in which:
Figure 1 shows an example of a prior art servo valve;
Figure 2a shows a perspective cross-sectional view of an embodiment of a nozzle assembly in accordance with this disclosure, with the locking pin removed;
Figure 2b shows a perspective cross-sectional view of an embodiment of a nozzle assembly in accordance with this disclosure, with the locking pin inserted;
Figure 3 shows a cross-sectional view of the nozzle assembly of Figure 2a taken through line 3-3;
Figures 4a shows a cross-sectional view of a nozzle assembly in accordance with an embodiment of this disclosure; and
Figures 4b shows a magnified view of the area around the locking pin in the nozzle assembly of Figure 4a;

### DETAILED DESCRIPTION

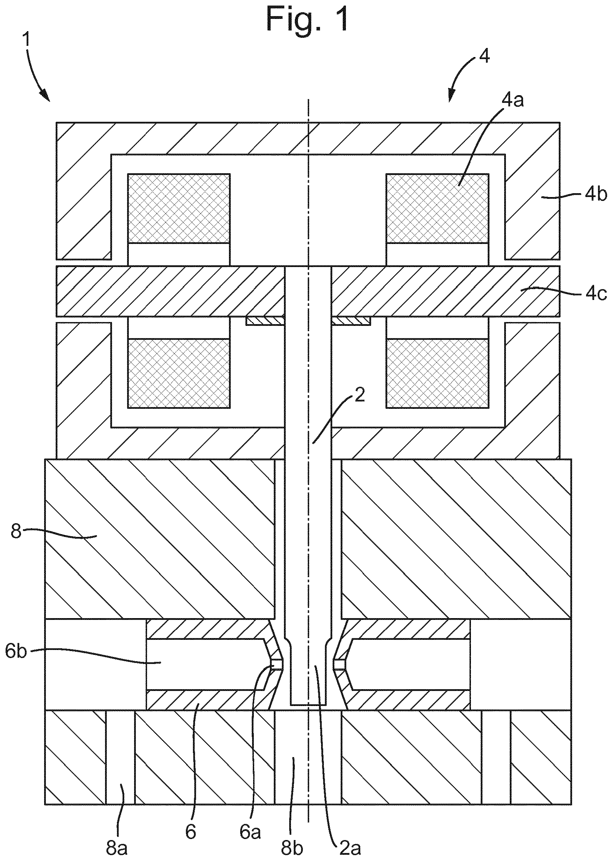

With reference to Figure 1, a servo valve 1 is illustrated. Servo valve 1 comprises an electric motor 4, a flapper 2, nozzles 6 and a nozzle housing 8. The electric motor 4 comprises coils 4a, permanent magnets 4b and an armature 4c. The coils 4a are in electrical communication with an electrical supply (not shown) and when activated, interact with the permanent magnets 4b to create movement of the armature 4c, as is well-known in the art.

The flapper 2 is attached to the armature 4c, and is deflected by movement of the armature 4c. The nozzles 6 are housed within the nozzle housing 8 via an interference fit and each comprise a fluid outlet 6a and a fluid inlet 6b. The nozzle housing 8 also has a pair of ports 8a, which allow communication of fluid to the nozzles 6.

The flapper 2 comprises a blocking element 2a at an end thereof which interacts with the fluid outlets 6a of the nozzles 6 to provide metering of fluid from the fluid outlets 6a to a fluid port 8b in the nozzle housing 8, which allows communication of metered fluid from the nozzles 6 to an actuator (not shown). As is known in the art, the electric motor 4 is used to control deflection of the blocking element 2a and vary the fluid delivered to the actuator from the nozzles 6 as required.

Calibration of the servo valve 1 is achieved by adjusting the axial distance from the nozzle fluid outlet 6a to the flapper 2, by pulling or pushing the nozzles 6 axially (left or right) within the nozzle housing 8.

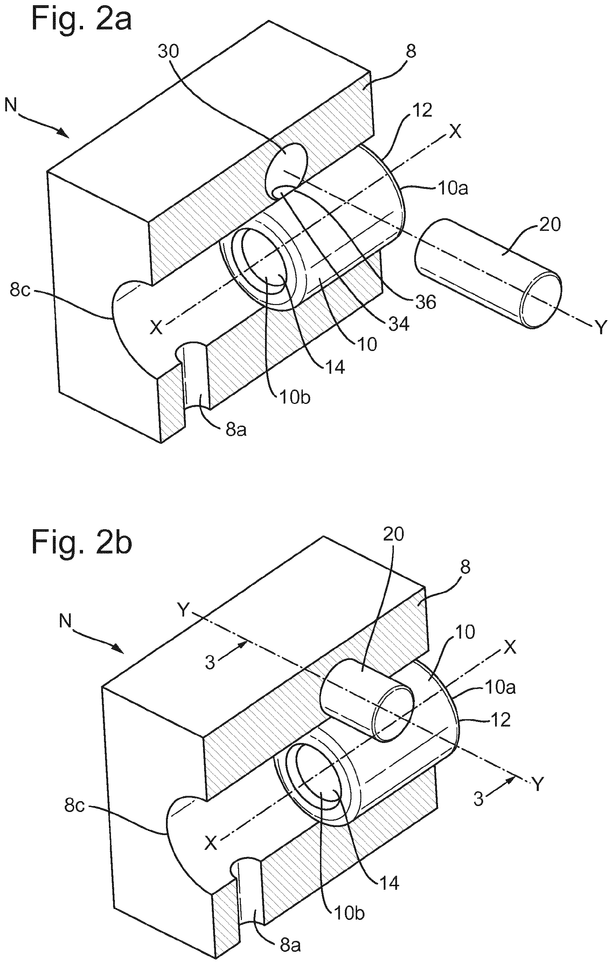

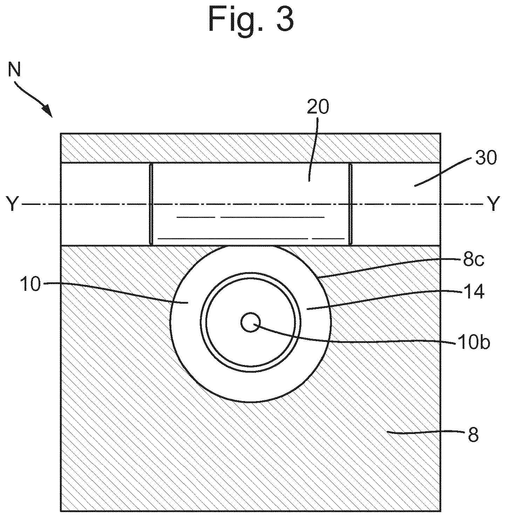

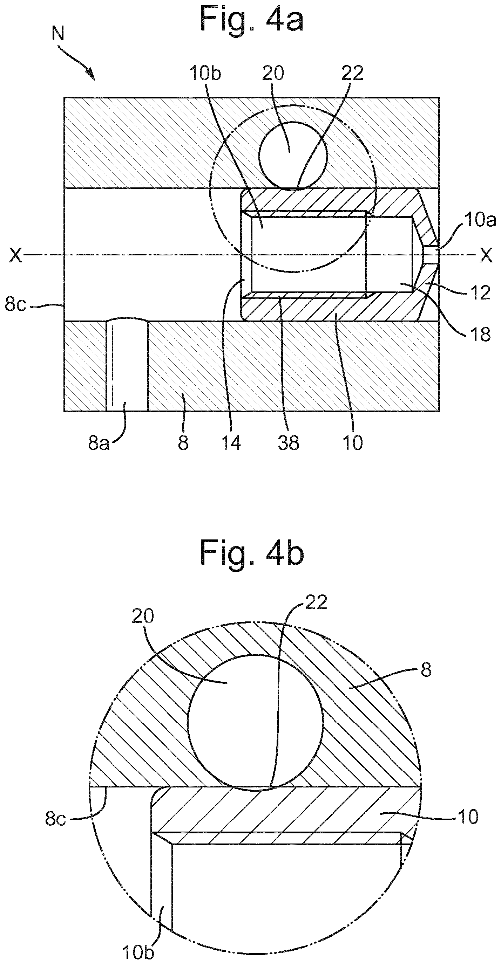

With reference to Figures 2a to 4b, a nozzle assembly N is illustrated for use in the servo valve of Figure 1. The nozzle assembly N comprises a nozzle 10, a nozzle housing 8 and a locking pin 20. In fact, the nozzle housing 8 may be as shown in Figure 1, receiving a pair of axially aligned nozzles 10.

The nozzle 10 defines a central passage 18 having a fluid outlet 10a at a first end 12 and a fluid inlet 10b at an opposed second end 14.

The nozzle housing 8 has a port 8a, which allows communication of fluid to the nozzle 10, a nozzle receiving bore 8c for receiving nozzle 10, and a locking pin receiving bore 30 for receiving the locking pin 20. The nozzle receiving bore 8c has a longitudinal axis X-X which in this embodiment is coaxial with the longitudinal axis of the nozzle 6.

The locking pin receiving bore 30 has a central longitudinal axis Y-Y which is perpendicular to the axis X-X of the nozzle receiving bore 8c. The locking pin receiving bore 30 intersects the nozzle receiving bore 8c such that an aperture 34 is formed between the locking pin receiving bore 30 and the nozzle receiving bore 8c.

The locking pin receiving bore 20 is, in this embodiment, arranged towards the inlet 14 of the nozzle 10. However, the axial position of the locking pin receiving bore 20 may be different in other embodiments.

In this embodiment, the locking pin receiving bore 30 and the nozzle receiving bore 8c are cylindrical in shape and circular in cross section, so that they may easily be formed by machining, for example drilling. However, this is not essential to the nozzle assembly construction and the respective bores 8c, 30 may be non-circular in cross section, for example square or rectangular in cross section. In addition, the locking pin receiving bore 30 at least need not be cylindrical and could have some other shape, for example a tapering shape or a rectangular prismatic shape.

In this embodiment, the nozzle 10 and locking pin 20 are also circular in cross section and have a complementary cylindrical shape to that of the nozzle receiving bore 8c and locking pin receiving bore 30 respectively. Of course if these bores 8c, 30 have a different shape from that shown, the nozzle 8 and locking pin 20 may have a different shape as well, for example complementary to the bore shapes.

In the embodiment illustrated, the locking pin receiving bore 30 is a through bore. This may be advantageous in that it allows the locking pin 20 to be accessible from both its ends which may facilitate its insertion or removal. However, this is not essential and the locking pin receiving bore 30 may, in other embodiments, be a blind bore, allowing access to just one end of the locking pin 20. In such an arrangement, the locking pin 20 may be provided with a suitable coupling at that end for the attachment of a tool for insertion or withdrawal of the locking pin 20 from the bore 30.

Also in the illustrated embodiment, the locking pin 20 is received completely within the locking pin receiving bore 30. Again this is not essential and the pin may project at one or more ends from the locking pin receiving bore 30. In one embodiment, for example, the locking pin 20 may be a push rod attached to a suitable actuator.

To facilitate calibration, the nozzle 10 may further comprise a threaded portion 38 on end 14 that can be removably secured to a calibration tool (not shown). The calibration tool may be a rod that can be threadably secured to the threaded portion 38 to allow the user to push or pull the nozzle 10 along the axis X-X.

As illustrated in Figures 4a and 4b, the intersection of the nozzle receiving bore 8c and the locking pin receiving bore 30 allows a portion 22 of the locking pin 20 to protrude through the aperture 34 so as to engage and interfere with a circumferential surface 36 of the nozzle 10 and thereby lock the nozzle 10 in position within the nozzle receiving bore 8c.

Installation and calibration of the nozzle 10 will now be described.

The nozzle 10 is firstly "loosely" interference fitted within housing 8, such that nozzle 10 is relatively easily moveable along the longitudinal axis X-X during calibration, but at the same time still provides a leak-proof seal around the nozzle 10 during calibration. The nozzle 10 is moved to its desired axial position in the nozzle receiving bore 8c, for example using a calibration tool as described above.

The locking pin 20 is received in the locking pin receiving bore 30 with a loose or close fit so that it may be moved along the axis Y-Y of the locking pin receiving bore 30. In other embodiments, the locking pin 20 could also be interference fit within receiving bore 30. In an initial position, the locking pin 20 is retracted relative to the aperture 34, but when the nozzle has been moved to its desired axial position, it is moved along the axis Y-Y to enter the aperture 34 and engage and interfere with the circumferential surface 36 of the nozzle 10. The movement of the locking pin should advantageously be purely translational and not rotational since a rotational movement may impart a force to the nozzle 10 with a component along the axis X-X, which could lead to unwanted axial movement of the nozzle 10. The arrangement of the axis Y-Y perpendicular to the axis X-X ensures that translational movement of the pin will not induce an axial force on the nozzle 10.

The interference of the locking pin 20 with the nozzle 10 firmly locks the nozzle 10 in position. In effect it provides an additional frictional force between the nozzle 10 and the nozzle housing 8. In this way, in embodiments of the disclosure, the degree of interference between the nozzle 10 and the nozzle housing 8 can be reduced compared to a prior art nozzle, thereby facilitating calibration but still ensuring sufficient resistance to movement of the nozzle 10 at elevated temperatures.

It may also mean that the dimensional tolerances between the nozzle 10 and nozzle housing 8 may be reduced compared to prior art nozzles, possibly avoiding the need for grinding of the circumferential surface 36 of the nozzle 10 and burnishing of the nozzle receiving bore 8c of the nozzle housing 8. This may reduce the cost of manufacturing the nozzle assembly N.

The described embodiment may also facilitate refurbishment or repair of the nozzle assembly N, allowing for easier removal of the nozzle 10 from the nozzle housing 8.

Although the figures and the accompanying description describe particular embodiments and examples, it is to be understood that the scope of this disclosure is not to be limited to such specific embodiments, and is, instead, to be determined by the following claims.

## Claims

1. A servo valve comprising a flapper and a nozzle assembly (N), the nozzle assembly (N) comprising:
a nozzle (10);
a nozzle housing (8) having a nozzle receiving bore (8c) having a longitudinal axis (X-X), the nozzle (10) being received within the nozzle receiving bore (8c); and **characterised by**
a locking pin receiving bore (30) having a longitudinal axis (Y-Y) that is perpendicular to the nozzle housing axis (X-X), the locking pin receiving bore (30) intersecting the nozzle receiving bore (8c), whereby an aperture (34) is formed between the locking pin receiving bore (30) and the nozzle receiving bore (8c); and
a locking pin (20) received in the locking pin receiving bore (30), a portion (22) of the locking pin (20) protruding through the aperture (34) and into the nozzle receiving bore (8c) so as to engage and interfere with a circumferential portion (36) of the nozzle (10).

2. A servo valve as claimed in claim 1, wherein the nozzle (10) is received with an interference fit within the nozzle receiving bore (8c).

3. A servo valve as claimed in claim 1 or 2, wherein the locking pin (32) is received with a close or loose fit in the locking pin receiving bore (30).

4. A servo valve as claimed in any preceding claim, wherein the nozzle receiving bore (8c) is cylindrical.

5. A servo valve as claimed in any preceding claim, wherein the locking pin receiving bore (30) is cylindrical.

6. A servo valve as claimed in any preceding claim, wherein the locking pin receiving bore (30) is a through bore.

7. A servo valve as claimed in any preceding claim, wherein the nozzle receiving bore (8c) and/or the locking pin receiving bore (30) are circular in cross section.

8. A servo valve as claimed in any preceding claim, wherein the nozzle (10) and/or the locking pin (20) are circular in cross section.

9. A servo valve as claimed in any preceding claim, wherein the nozzle (10) is provided with a threaded connection (38) at one end (14) for connection to a calibration tool.

10. A servo valve as claimed in any preceding claim, wherein the nozzle receiving bore (8c) receives a pair of opposed nozzles (10).

11. A method of assembling a servo valve comprising a flapper and a nozzle assembly, the method comprising:
providing a nozzle housing (8) having a nozzle receiving bore (8c) having a longitudinal axis (X-X) and a locking pin receiving bore (30) having a longitudinal axis (Y-Y) perpendicular to the longitudinal axis (X-X) of the nozzle receiving bore (8c) and intersecting the nozzle receiving bore (8), whereby an aperture (34) is formed between the locking pin receiving bore (30) and the nozzle receiving bore (8c);
inserting a nozzle (10) into the nozzle receiving bore (8c); and
inserting a locking pin (20) into the locking pin receiving bore (30) such that a portion (22) of the locking pin (20) protrudes through the aperture (34) and presses onto a circumferential portion (36) of the nozzle (10) to lock the nozzle (10) in position within the nozzle receiving bore (8c).

12. A method of calibrating a servo valve comprising a flapper and a nozzle assembly, the nozzle assembly comprising a nozzle housing (8) having a nozzle receiving bore (8c) having a longitudinal axis X-X and a locking pin receiving bore (30) having an axis (Y-Y) perpendicular to the axis (X-X) of the nozzle receiving bore (8) and intersecting the nozzle receiving bore (8), whereby an aperture (34) is formed between the locking pin receiving bore (30) and the nozzle receiving bore (8c); the method comprising:
moving a nozzle (10) in the nozzle receiving bore (8c) to a desired axial position within the nozzle receiving bore (8c); and
inserting a locking pin (20) into the locking pin receiving bore (30) such that a portion (22) of the locking pin (20) protrudes through the aperture (34) and presses onto a circumferential portion (36) of the nozzle (10) to lock the nozzle (10) in the desired axial position within the nozzle receiving bore (8c).

13. A method as claimed in claim 11 or 12, wherein the nozzle (10) is received in the nozzle receiving bore (8c) with an interference fit.

14. A method as claimed in claim 11, 12 or 13, wherein the nozzle (10) is inserted or moved in the nozzle receiving bore (8c) by a tool engaging an end (14) of the nozzle (10).

## Patentansprüche

1. Servoventil mit einer Klappe und einer Düsenanordnung (N), wobei die Düsenanordnung (N) Folgendes umfasst:
eine Düse (10);
ein Düsengehäuse (8), das eine Düsenaufnahmebohrung (8c) mit einer Längsachse (X-X) aufweist, wobei die Düse (10) in der Düsenaufnahmebohrung (8c) aufgenommen ist; und **gekennzeichnet durch**
eine Aufnahmebohrung (30) für einen Sperrstift mit einer Längsachse (Y-Y), die sich senkrecht zu der Düsengehäuseachse (X-X) erstreckt, wobei die Aufnahmebohrung (30) für den Sperrstift die Düsenaufnahmebohrung (8c) schneidet, wodurch eine Öffnung (34) zwischen der Aufnahmebohrung (30) für den Sperrstift und der Düsenaufnahmebohrung (8c) gebildet wird; und
einen Sperrstift (20), der in der Aufnahmebohrung (30) für den Sperrstift aufgenommenen ist, wobei ein Abschnitt (22) des Sperrstiftes (20) durch die Öffnung (34) und in die Düsenaufnahmebohrung (8c) ragt, um in einen Umfangsabschnitt (36) der Düse (10) einzugreifen und diesen zu behindern.

2. Servoventil nach Anspruch 1, wobei die Düse (10) mit einer Presspassung in der Düsenaufnahmebohrung (8c) aufgenommen ist.

3. Servoventil nach Anspruch 1 oder 2, wobei der Sperrstift (32) in einer engen oder lockeren Passung in der Aufnahmebohrung (30) für den Sperrstift aufgenommen ist.

4. Servoventil nach einem der vorhergehenden Ansprüche, wobei die Düsenaufnahmebohrung (8c) zylindrisch ist.

5. Servoventil nach einem der vorhergehenden Ansprüche, wobei die Aufnahmebohrung (30) für den Sperrstift zylindrisch ist.

6. Servoventil nach einem der vorhergehenden Ansprüche, wobei es sich bei der Aufnahmebohrung (30) für den Sperrstift um eine Durchgangsbohrung handelt.

7. Servoventil nach einem der vorhergehenden Ansprüche, wobei die Düsenaufnahmebohrung (8c) und/oder die Aufnahmebohrung (30) für den Sperrstift einen kreisförmigen Querschnitt aufweist/aufweisen.

8. Servoventil nach einem der vorhergehenden Ansprüche, wobei die Düse (10) und/oder der Sperrstift (20) einen kreisförmigen Querschnitt aufweist/aufweisen.

9. Servoventil nach einem der vorhergehenden Ansprüche, wobei die Düse (10) mit einer Gewindeverbindung (38) an einem Ende (14) zur Verbindung mit einem Kalibrierungswerkzeug bereitgestellt ist.

10. Servoventil nach einem der vorhergehenden Ansprüche, wobei die Düsenaufnahmebohrung (8c) ein Paar gegenüberliegender Düsen (10) aufnimmt.

11. Verfahren zum Montieren eines Servoventils mit einer Klappe und einer Düsenanordnung, wobei das Verfahren Folgendes umfasst:
Bereitstellen eines Düsengehäuses (8), das eine Düsenaufnahmebohrung (8c) mit einer Längsachse (X-X) und eine Aufnahmebohrung (30) für einen Sperrstift aufweist, die eine senkrecht zu der Längsachse (X-X) der Düsenaufnahmebohrung (8c) verlaufende Längsachse (Y-Y) aufweist und die Düsenaufnahmebohrung (8) schneidet, wodurch eine Öffnung (34) zwischen der Aufnahmebohrung (30) für den Sperrstift und der Düsenaufnahmebohrung (8c) gebildet wird;
Einführen einer Düse (10) in die Düsenaufnahmebohrung (8c); und
Einführen eines Sperrstiftes (20) in die Aufnahmebohrung (30) für den Sperrstift, sodass ein Abschnitt (22) des Sperrstiftes (20) durch die Öffnung (34) ragt und auf einen Umfangsabschnitt (36) der Düse (10) drückt, um die Düse (10) in ihrer Position in der Düsenaufnahmebohrung (8c) zu verriegeln.

12. Verfahren zum Kalibrieren eines Servoventils mit einer Klappe und einer Düsenanordnung, wobei die Düsenanordnung ein Düsengehäuse (8) umfasst, das eine Düsenaufnahmebohrung (8c) mit einer Längsachse X-X und eine Aufnahmebohrung (30) für einen Sperrstift aufweist, die eine senkrecht zu der Achse (X-X) der Düsenaufnahmebohrung (8) verlaufende Achse (Y-Y) aufweist und die Düsenaufnahmebohrung (8) schneidet, wodurch eine Öffnung (34) zwischen der Aufnahmebohrung (30) für den Sperrstift und der Düsenaufnahmebohrung (8c) gebildet wird; wobei das Verfahren Folgendes umfasst:
Bewegen einer Düse (10) in der Düsenaufnahmebohrung (8c) in eine gewünschte axiale Position in der Düsenaufnahmebohrung (8c); und
Einführen eines Sperrstiftes (20) in die Aufnahmebohrung (30) für den Sperrstift, sodass ein Abschnitt (22) des Sperrstiftes (20) durch die Öffnung (34) ragt und auf einen Umfangsabschnitt (36) der Düse (10) drückt, um die Düse (10) in der gewünschten axialen Position in der Düsenaufnahmebohrung (8c) zu verriegeln.

13. Verfahren nach Anspruch 11 oder 12, wobei die Düse (10) mit einer Presspassung in der Düsenaufnahmebohrung (8c) aufgenommen ist.

14. Verfahren nach Anspruch 11, 12 oder 13, wobei die Düse (10) durch ein Werkzeug, das in ein Ende (14) der Düse (10) eingreift, in die Düsenaufnahmebohrung (8c) eingeführt oder in dieser bewegt wird.

## Revendications

1. Servovanne comprenant un clapet et un ensemble buse (N), l'ensemble buse (N) comprenant :
une buse (10) ;
un boîtier de buse (8) ayant un alésage de réception de buse (8c) ayant un axe longitudinal (X-X), la buse (10) étant reçue à l'intérieur de l'alésage de réception de buse (8c) ; et **caractérisé par**
un alésage de réception de broche de verrouillage (30) ayant un axe longitudinal (Y-Y) qui est perpendiculaire à l'axe du boîtier de buse (X-X), l'alésage de réception de broche de verrouillage (30) coupant l'alésage de réception de buse (8c), moyennant quoi une ouverture (34) est formée entre l'alésage de réception de broche de verrouillage (30) et l'alésage de réception de buse (8c) ; et
une broche de verrouillage (20) reçue dans l'alésage de réception de broche de verrouillage (30), une partie (22) de la broche de verrouillage (20) faisant saillie à travers l'ouverture (34) et dans l'alésage de réception de buse (8c) de manière à s'engager et à interférer avec une partie circonférentielle (36) de la buse (10).

2. Servovanne selon la revendication 1, dans laquelle la buse (10) est reçue avec un ajustement serré à l'intérieur de l'alésage de réception de buse (8c).

3. Servovanne selon la revendication 1 ou 2, dans laquelle la broche de verrouillage (32) est reçue avec un ajustement serré ou lâche dans l'alésage de réception de broche de verrouillage (30) .

4. Servovanne selon une quelconque revendication précédente, dans laquelle l'alésage de réception de buse (8c) est cylindrique.

5. Servovanne selon une quelconque revendication précédente, dans laquelle l'alésage de réception de broche de verrouillage (30) est cylindrique.

6. Servovanne selon une quelconque revendication précédente, dans laquelle l'alésage de réception de broche de verrouillage (30) est un alésage traversant.

7. Servovanne selon une quelconque revendication précédente, dans laquelle l'alésage de réception de buse (8c) et/ou l'alésage de réception de broche de verrouillage (30) ont une section transversale circulaire.

8. Servovanne selon une quelconque revendication précédente, dans laquelle la buse (10) et/ou la broche de verrouillage (20) ont une section transversale circulaire.

9. Servovanne selon une quelconque revendication précédente, dans laquelle la buse (10) est pourvue d'une connexion filetée (38) à une extrémité (14) pour la connexion à un outil d'étalonnage.

10. Servovanne selon une quelconque revendication précédente, dans laquelle l'alésage de réception de buse (8c) reçoit une paire de buses opposées (10).

11. Procédé d'assemblage d'une servovanne comprenant un clapet et un ensemble buse, le procédé comprenant :
la fourniture d'un boîtier de buse (8) ayant un alésage de réception de buse (8c) ayant un axe longitudinal (X-X) et un alésage de réception de broche de verrouillage (30) ayant un axe longitudinal (Y-Y) perpendiculaire à l'axe longitudinal (X-X) de l'alésage de réception de buse (8c) et coupant l'alésage de réception de buse (8), moyennant quoi une ouverture (34) est formée entre l'alésage de réception de broche de verrouillage (30) et l'alésage de réception de buse (8c) ;
l'insertion d'une buse (10) dans l'alésage de réception de buse (8c) ; et
l'insertion d'une broche de verrouillage (20) dans l'alésage de réception de la broche de verrouillage (30) de sorte qu'une partie (22) de la broche de verrouillage (20) fait saillie à travers l'ouverture (34) et appuie sur une partie circonférentielle (36) de la buse (10) pour verrouiller la buse (10) en position à l'intérieur de l'alésage de réception de buse (8c) .

12. Procédé d'étalonnage d'une servovanne comprenant un clapet et un ensemble buse, l'ensemble buse comprenant un boîtier de buse (8) ayant un alésage de réception de buse (8c) ayant un axe longitudinal X-X et un alésage de réception de broche de verrouillage (30) ayant un axe (Y-Y) perpendiculaire à l'axe (X-X) de l'alésage de réception de buse (8) et coupant l'alésage de réception de buse (8), moyennant quoi une ouverture (34) est formée entre l'alésage de réception de broche de verrouillage (30) et l'alésage de réception de buse (8c) ; le procédé comprenant :
le déplacement d'une buse (10) dans l'alésage de réception de buse (8c) jusqu'à une position axiale souhaitée à l'intérieur de l'alésage de réception de buse (8c) ; et
l'insertion d'une broche de verrouillage (20) dans l'alésage de réception de broche de verrouillage (30) de sorte qu'une partie (22) de la broche de verrouillage (20) fait saillie à travers l'ouverture (34) et appuie sur une partie circonférentielle (36) de la buse (10) pour verrouiller la buse (10) dans la position axiale souhaitée à l'intérieur de l'alésage de réception de buse (8c).

13. Procédé selon la revendication 11 ou 12, dans lequel la buse (10) est reçue dans l'alésage de réception de buse (8c) avec un ajustement serré.

14. Procédé selon la revendication 11, 12 ou 13, dans lequel la buse (10) est insérée ou déplacée dans l'alésage de réception de buse (8c) par un outil mettant en prise une extrémité (14) de la buse (10).
